# EUROPEAN PATENT SPECIFICATION

(11) **EP 2 441 517 B1**
(45) Date of publication and mention of the grant of the patent: **13.04.2022**
(21) Application number: 10786207.0
(22) Date of filing: 10.06.2010
(51) Int. Cl.: B01J 23/78, B01J 27/232, B01J 37/08, C01B 3/40

(54) **HYDROCARBON GAS REFORMING CATALYST, METHOD FOR PRODUCING SAME, AND METHOD FOR PRODUCING SYNTHETIC GAS**
KATALYSATOR ZUR KOHLENWASSERSTOFFGASREFORMIERUNG, VERFAHREN ZU SEINER HERSTELLUNG UND SYNTHESEGASHERSTELLUNGSVERFAHREN
CATALYSEUR DE REFORMAGE DE GAZ D'HYDROCARBURES, PROCÉDÉ DE PRODUCTION DE CELUI-CI ET PROCÉDÉ DE PRODUCTION DE GAZ DE SYNTHÈSE

(30) Priority: 12.06.2009 JP 2009141085; 21.08.2009 JP 2009191712
(43) Date of publication of application: 18.04.2012
(73) Proprietor: Murata Manufacturing Co., Ltd., Kyoto 617-8555 (JP)
(72) Inventor: SATO, Hideto, Nagaokakyo-shi Kyoto 617-8555 (JP); SAITO, Yoshinori, Nagaokakyo-shi Kyoto 617-8555 (JP)
(74) Representative: Zinnecker, Armin
(86) International application number: PCT/JP2010/059817
(87) International publication number: WO 2010/143676

(56) References cited:
- WO-A1-2008/084785
- JP-A- 10 194 703
- JP-A- 2002 059 006
- JP-A- 2004 089 812
- JP-A- 2006 346 598
- TAKEHIRA K ET AL: "PARTIAL OXIDATION OF METHANE TO SYNTHESIS GAS OVER (CA,SR) (TI,NI) OXIDES", CATALYSIS TODAY, AMSTERDAM, NL, vol. 24, no. 3, 23 May 1995 (1995-05-23), pages 237-242,I/II, XP002907446, DOI: 10.1016/0920-5861(95)00031-A
- Takashi Hayakawa ET AL: "Sustainable Ni/Cal_xSrxTiO 3 catalyst prepared in situ for the partial oxidation of methane to synthesis gas", ELSEVIER Applied Catalysis A: General, 1 January 1997 (1997-01-01), pages 391-410, XP055098680, Retrieved from the Internet: URL:http://ac.els-cdn.com/S0926860X9600274 8/1-s2.0-S0926860X96002748-main.pdf?_tid=f a4078c6-8769-11e3-b3d7-00000aab0f6b&acdnat =1390837679_d8479f7098f303b80053ffab3314c9 03 [retrieved on 2014-01-27]
- KOHEI URASAKI ET AL: "Hydrogen Production by Steam Reforming of Ethanol Using Cobalt and Nickel Catalysts Supported on Strontium Titanate", CHEMISTRY LETTERS, vol. 34, no. 5, 1 January 2005 (2005-01-01), pages 668-669, XP055098681, ISSN: 0366-7022, DOI: 10.1246/cl.2005.668
- ANDREW M. BEALE ET AL: "Combined experimental and computational modelling studies of the solubility of nickel in strontium titanate", JOURNAL OF MATERIALS CHEMISTRY, vol. 19, no. 25, 1 January 2009 (2009-01-01), page 4391, XP055098684, ISSN: 0959-9428, DOI: 10.1039/b902591j
- KAZUNARI DOMEN ET AL: "Study of the photocatalytic decomposition of water vapor over a nickel(II) oxide-strontium titanate (SrTiO3) catalyst", THE JOURNAL OF PHYSICAL CHEMISTRY, vol. 86, no. 18, 1 September 1982 (1982-09-01), pages 3657-3661, XP055098669, ISSN: 0022-3654, DOI: 10.1021/j100215a032
- KAZUNARI DOMEN ET AL: "Photocatalytic decomposition of water into hydrogen and oxygen over nickel(II) oxide-strontium titanate (SrTiO3) powder. 1. Structure of the catalysts", THE JOURNAL OF PHYSICAL CHEMISTRY, vol. 90, no. 2, 1 January 1986 (1986-01-01), pages 292-295, XP055098672, ISSN: 0022-3654, DOI: 10.1021/j100274a018

## Description

### TECHNICAL FIELD

The present invention relates to a catalyst for reforming a hydrocarbon gas used in manufacturing a synthesized gas containing hydrogen and carbon monoxide by reforming a hydrocarbon source material gas, a hydrocarbon gas reforming catalyst precursor for producing a synthesized gas containing carbon monoxide and hydrogen by reforming a hydrocarbon gas and a method of manufacturing the same.

### BACKGROUND ART

Various hydrocarbon gases are generated from the field of art such as petroleum refining or petrochemistry; however, these gases are not necessarily utilized efficiently as source material gases of various substances, so that a method of conversion into more effective substances has been demanded.

Under such circumstances, as a method of manufacturing a synthesized gas containing hydrogen and carbon monoxide by reforming a hydrocarbon gas, there are known methods such as reforming hydrocarbon with carbon dioxide, reforming hydrocarbon with water vapor, and reforming saturated hydrocarbon by using carbon dioxide and water vapor in combination in which both of carbon dioxide and water vapor are allowed to react in the presence of a catalyst.

Reforming hydrocarbon with carbon dioxide is suitable for manufacturing a synthesized gas having a comparatively high carbon monoxide concentration by allowing saturated hydrocarbon such as methane and carbon dioxide to react in the presence of a catalyst.

On the other hand, reforming hydrocarbon with water vapor is suitable for manufacturing a synthesized gas having a comparatively high hydrogen concentration by allowing saturated hydrocarbon such as methane and water vapor to react in the presence of a catalyst.

Also, the method of reforming saturated hydrocarbon such as methane by using carbon dioxide and water vapor in combination in which both of carbon dioxide and water vapor are allowed to react in the presence of a catalyst has an advantage in that the ratio of hydrogen and carbon monoxide in the synthesized gas to be manufactured can be adjusted by adjusting the ratio of carbon dioxide and water vapor.

By such reforming of hydrocarbon gas, carbon may be deposited on the catalyst during the process of decomposition of the hydrocarbon. The degree of this carbon deposition varies depending on a hydrocarbon reforming condition. It is reported that carbon is most liable to be deposited in the reforming of hydrocarbon with carbon dioxide, and that the amount of carbon deposition is comparatively small in the reforming of hydrocarbon with water vapor. However, the carbon deposited on the catalyst is gradually accumulated to lower the catalyst activity. When carbon is deposited in a large amount, there is a fear of clogging the reaction tube. Therefore, even in the reforming of hydrocarbon with water vapor, carbon deposition is restrained generally by setting the ratio of water vapor to hydrocarbon (hereafter "water vapor / hydrocarbon ratio") to be high so as to introduce water vapor in an excessive amount.

Then, as a catalyst for reforming hydrocarbon with carbon dioxide or water vapor, there are known a nickel catalyst in which nickel is carried on a base such as alumina, a ruthenium catalyst in which ruthenium is carried (See JP 08-231204 A), and further a rhodium catalyst in which rhodium is carried on a base such as alumina (See JP 09-168740 A) and the like.

Also, as a catalyst for reforming hydrocarbon with carbon dioxide, a catalyst for reforming with carbon dioxide containing a carbonate of at least one kind of alkaline earth metal selected from Ca, Sr, and Ba, a catalyst metal selected from Ni, Rh, Ru, Ir, Pd, Pt, Re, Co, Fe, Mo, and the like, and ATiO₃ (A is at least one kind of alkaline earth metal selected from the group consisting of Ca, Sr, and Ba) is proposed (See WO 2008/084785 A).

A nickel catalyst typical as a catalyst for reforming hydrocarbon with water vapor in which nickel is carried on a base such as alumina is liable to cause carbon deposition on the catalyst. Therefore, in order to restrain the lowering of activity by carbon deposition, there is a need to perform a reaction of reforming hydrocarbon with water vapor under a condition of a high water vapor / hydrocarbon ratio in which water vapor is excessive relative to the hydrocarbon. However, in order to make the water vapor excessive, there is raised a problem in that the energy consumption increases in the process of vaporizing water. Also, there is a problem in that it is not suitable for use that needs a synthesized gas having a high carbon monoxide concentration such as fuel synthesis because the carbon monoxide concentration in the composition of the synthesized gas to be manufactured decreases. Further, in the case of attempting to reform hydrocarbon with carbon dioxide or to reform hydrocarbon by using carbon dioxide and water vapor in combination, there is a problem in that a stable and efficient operation of the apparatus is difficult with the above nickel catalyst because it is a reforming reaction that is more liable to generate the carbon deposition.

Also, a ruthenium catalyst as shown in Patent Document 1 has a function of restraining carbon deposition, so that the carbon deposition is less in amount as compared with a nickel catalyst, and also maintenance of the activity is easy. However, there is a problem in that, when unsaturated hydrocarbon such as ethylene coexists in a source material, thermal carbon deposition and a decrease in the activity are liable to occur, so that, even if the ruthenium catalyst produces an effect of restraining the carbon deposition, the catalyst is intoxicated by unsaturated hydrocarbon or the like contained in the source material gas, leading to a decrease in the activity.

Also, it is assumed that a rhodium catalyst in which rhodium is carried on a base such as alumina, as shown in JP 09-168740 A, also raises a similar problem.

Also, even in a case where the catalyst for reforming with carbon dioxide of WO 2008/084785 A is used, carbon deposition onto the catalyst is liable to be generated when the reforming condition becomes a high-pressure condition, thereby raising a problem of decrease in the reforming efficiency.

Further catalysts comprising a NiO-Sr2TiO4 solid solution in which NiO is dissolved in Sr2TiO4 are known from further prior art documents TAKEHIRA K ET AL: "PARTIAL OXIDATION OF METHANE TO SYNTHESIS GAS OVER (CA, SR)(TI,NI) OXIDES", CATALYSIS TODAY, AMSTERDAM, NL, vol. 24, No. 3, 23 May 1995 (1995-05-23), pages 237-242, I/II. Takahashi Hayakawa ET AL: "Sustainable Ni/Cal_xSrxTiO 3 catalyst prepared in situ for the partial oxidation of methane to synthesis gas", ELSEVIER Applied Catalysis A: General, 1 January 1997 (1997-01-01), pages 391-410. KOHEI URASAKI ET AL: "Hydrogen Production by Steam Reforming of Ethanol Using Cobalt and Nickel Catalysts Supported on Strontium Titanate", CHEMISTRY LETTERS, vol. 34, no. 5, 1 January 2005 (2005-01-01), pages 668-66. ANREW M. BEALE ET AL: "Combined experimental and computational modelling studies of the solubility of nickel in strontium titanate", JOURNAL OF MATERIALS CHEMISTRY, vol. 19, no. 25, 1 January 2009 (2009-01-01), page 4391. KAZUNARI DOMEN AT AL: "Study of the photocatalytic decomposition of water vapor over a nickel(II) oxide-strontium titanate (SrTiO3) catalyst", THE JOURNAL OF PHYSICAL CHEMISTRY, vol. 86, no. 18, 1 September 1982 (1982-09-01), pages 3657-3661. KAZUNARI DOMEN AT AL: "Photocytalytic decomposition of water into hydrogen and oxygen over nickel(II) oxide strontium titanate (SrTiO3) powder. 1. Structure of the catalysts", THE JOURNAL OF PHYSICAL CHEMISTRY, vol. 90, no. 2, 1 January 1986 (1986-01-01) pages 292-295.

### SUMMARY OF THE INVENTION

### PROBLEMS TO BE SOLVED BY THE INVENTION

The present invention solves the aforementioned problems, and an object thereof is to provide a catalyst for reforming a hydrocarbon gas capable of efficiently producing hydrogen and carbon monoxide by allowing a hydrocarbon source material gas and carbon dioxide and/or water vapor to react while restraining the deposition of carbon, furthermore a hydrocarbon gas reforming catalyst precursor and a method of manufacturing the same.

### MEANS FOR SOLVING THE PROBLEMS

In order to solve the aforementioned problems, the present invention provides for a method of manufacturing a hydrocarbon gas reforming catalyst precursor as defined by claim 1, a hydrocarbon gas reforming catalyst precursor as defined by claim 4 and a hydrocarbon gas reforming catalyst as defined by claim 5. Preferred embodiments of the invention are laid down in the dependent claims.

The hydrocarbon gas reforming catalyst precursor has a feature of including a NiO-Sr₂TiO₄ solid solution in which NiO is dissolved in Sr₂TiO₄.

In the above hydrocarbon gas reforming catalyst precursor, the ratio of NiO in the NiO-Sr₂TiO₄ solid solution is a ratio of 2.2 to 13.5 parts by mol relative to 100 parts by mol of Sr₂TiO₄.

The hydrocarbon gas reforming catalyst used for producing a synthesized gas containing carbon monoxide and hydrogen by reforming a hydrocarbon gas with use of carbon dioxide and/or water vapor, has a feature of including SrTiO₃, SrCO₃, and Ni and/or NiO that are produced by allowing carbon dioxide to act on the NiO-Sr₂TiO₄ solid solution.

The method of manufacturing a hydrocarbon gas reforming catalyst precursor comprising a NiO-Sr2TiO4 solid solution in which NiO is dissolved in a Sr2TiO4, includes the steps of:
providing SrCO3 and TiO3 in a molar ratio of 2:1, adding NiO and mixing so as to attain a ratio of 2.2 to 13.5 parts by mol relative to 100 parts by mol of the Sr2TiO4, to be produced,
adding a binder to the mixture for granulation so as to obtain a spherical granulated body having a diameter of 2 to 5 mm, and
producing the NiO-Sr2TiO4 solid solution in which NiO is dissolved in Sr2TiO4 by placing said granulated body in air and firing said granulated body at a temperature of 1100°C for one hour.

### EFFECTS OF THE INVENTION

The hydrocarbon gas reforming catalyst precursor (hereafter simply also referred to as a reforming catalyst precursor ) of the present invention is a catalyst precursor containing a NiO-Sr2TiO4 solid solution in which NiO is dissolved in Sr₂TiO₄, and the Ni and/or NiO deposited by allowing carbon dioxide to act will be fine grains. As a result, it is possible to obtain a reforming catalyst capable of restraining carbon deposition even when a reforming reaction is carried out by allowing a hydrocarbon source material gas and carbon dioxide and/or water vapor to react under high pressure.

Here, in chemical synthesis, according as a reaction is carried out at higher pressure, the ratio of conversion to a synthesized product will rise. Therefore, it is assumed that the process of manufacturing a synthesized gas used as a source material preferably has high pressure. However, the reforming catalyst according to the present invention in which fine Ni and/or NiO is deposited can be used without occurring carbon deposition even under high pressure, as described above. Therefore, when the reforming catalyst is used by being incorporated into a part of a chemical synthesis process that carries out a reaction under high pressure, it will be particularly significant. In other words, by using the reforming catalyst according to the present invention, there will be no need to re-pressurize the synthesized gas obtained under low pressure.

Also, since a reaction under high pressure is enabled, there is an advantage in that the reaction apparatus in the reforming reaction will be compact.

Here, the reforming catalyst according to the present invention in which fine Ni and/or NiO is deposited can be used under a pressure of 5 atm or higher in terms of absolute pressure.

The reforming catalyst according to the present invention works as a catalyst in the case of carrying out the following reaction by allowing methane, which is hydrocarbon, and carbon dioxide to flow at a high temperature of 800°C to 1100°C, for example.

CH₄ ⇒ C + 2H₂ (1)

C + CO₂ ⇒ 2CO (2)

CH₄ + CO₂ ⇒ 2H₂ + 2CO (3)

Here, in the reaction of reforming methane (CH4) with carbon dioxide, the decomposition reaction of CH₄ in the formula (1) and the reaction of producing CO in the formula (2) proceed and, as a result, the reforming reaction with carbon dioxide is represented by the formula (3).

With a conventional catalyst in which an oxide such as alumina or silica is used as a carrier, the reaction speed of the formula (2) is slower as compared with the reaction of the formula (1), so that the decomposition of CH4 in the formula (1) may proceed to generate carbon deposition, or the reverse reaction of the formula (2) may proceed to generate carbon deposition.

In contrast, the reforming catalyst of the present invention particularly produces an effect of promoting the reaction of the formula (2). By a catalyst function of fine Ni and/or NiO, the carbon generated by the reaction of the formula (1) can be removed by the reaction of the formula (2) and, as a result, carbon deposition can be restrained.

Also, the reforming catalyst according to the present invention also works effectively as a catalyst in the case of generating a reaction of methane, which is hydrocarbon, and water vapor at a high temperature, which is represented by the following formula (4).

CH₄ + H₂O ⇒ 3H₂ + CO (4)

Further, the reforming catalyst according to the present invention works effectively as a reforming catalyst in the case of obtaining a synthesized gas in which the ratio of H₂ and CO is, for example, H₂/CO = 3 to 1 in volume ratio by simultaneously carrying out the carbon dioxide reforming reaction in which methane, which is hydrocarbon, and carbon dioxide are allowed to react as in the above formulas (1) to (3) and the water vapor reforming reaction in which methane, which is hydrocarbon, and water vapor are allowed to react as in the above formula (4).

Also, by setting the ratio of NiO in the NiO-Sr₂TiO₄ solid solution to be within a range of 2.2 parts by mol to 13.5 parts by mol relative to 100 parts by mol of Sr₂TiO₄ in the present invention, the whole of NiO can be dissolved in Sr₂TiO₄, whereby it is possible to obtain a reforming catalyst capable of restraining and preventing the carbon deposition with a further greater certainty when fine Ni and/or NiO is deposited by allowing carbon dioxide to act on the NiO-Sr₂TiO₄ solid solution for use in reforming with carbon dioxide, reforming with water vapor, or combination reforming with use of both of carbon dioxide and water vapor, making the present invention further more effective.

Also, by thermally treating a mixture containing SrTiO₃, SrCO₃, and NiO at a temperature of 1100°C for one hour in producing a NiO-Sr₂TiO₄ solid solution in which NiO is dissolved in Sr₂TiO₄ (Sr-Ti composite oxide), the NiO-Sr₂TiO₄ solid solution in which NiO is dissolved in Sr₂TiO₄ can be produced with certainty.

Also, by thermally treating a mixture containing TiO₂, SrCO₃, and NiO at a temperature of 1100°C for one hour in producing a NiO-Sr₂TiO₄ solid solution in which NiO is dissolved in Sr₂TiO₄, the NiO-Sr₂TiO₄ solid solution in which NiO is dissolved in Sr₂TiO₄ can be produced with certainty.

Also, according to the method of manufacturing a reforming catalyst of the present invention, a reforming catalyst precursor containing a NiO-Sr₂TiO₄ solid solution as a major component can be produced efficiently and with certainty, and also a reforming catalyst containing SrTiO₃, SrCO₃, and Ni and/or NiO as major components can be produced efficiently and with certainty.

Here, the thermal treatment temperature in the thermal treatment step for producing the NiO-Sr₂TiO₄ solid solution is set to be a temperature of 1100°C for one hour.

Here, in the case of producing a reforming catalyst containing SrTiO₃, SrCO₃, and Ni and/or NiO via the NiO-Sr₂TiO₄ solid solution, NiO is temporarily dissolved in Sr₂TiO₄, so that the Ni and/or NiO that is deposited thereafter will be fine grains. As a result, it is possible to obtain a reforming catalyst capable of restraining carbon deposition even when a reforming reaction is carried out by allowing a hydrocarbon source material gas and carbon dioxide and/or water vapor to react under high pressure.

Also, according to the method of manufacturing a synthesized gas of the present invention, a synthesized gas containing hydrogen and carbon monoxide can be efficiently manufactured from a hydrocarbon source material gas while restraining carbon deposition when the catalyst is used in any of the reforming reactions of reforming with carbon dioxide in which reforming is carried out by allowing hydrocarbon and carbon dioxide to react with each other, reforming with water vapor in which reforming is carried out by allowing hydrocarbon and water vapor to react with each other, and combination reforming with use of both of carbon dioxide and water vapor.

### BRIEF EXPLANATION OF DRAWINGS

FIG. 1 is a view showing a schematic constitution of a testing apparatus used in carrying out a method of manufacturing a synthesized gas according to an example of the present invention.
FIG. 2(a) shows a TEM image of a reforming catalyst A manufactured in the example of the present invention, and FIG. 2(b) is a view showing an EDX mapping image related to Ni of the reforming catalyst A.
FIG. 3(a) shows a TEM image of a reforming catalyst D (comparative example) manufactured for comparison in the example of the present invention, and FIG. 3(b) is a view showing an EDX mapping image related to Ni of the reforming catalyst D.
FIG. 4(a) shows a TEM image of a reforming catalyst F (comparative example) manufactured for comparison in the example of the present invention, and FIG. 4(b) is a view showing an EDX mapping image related to Ni of the reforming catalyst F.

### MODE FOR CARRYING OUT THE INVENTION

Hereafter, the features of the present invention will be described in further detail with reference to examples of the present invention.

### EXAMPLE 1

### [1] Manufacture of reforming catalyst

### (1) Manufacture of a reforming catalyst precursor

A according to an example of the present invention Strontium carbonate (SrCO₃) and titanium oxide (TiO₂) were weighed so as to attain a molar ratio of 2.0 : 1.0, and further, nickel oxide (NiO) was added and mixed so as to attain a ratio of 8.9 parts by mol relative to 100 parts by mol of the Sr₂TiO₄ to be produced. Subsequently, a binder was added to this mixture for granulation, so as to obtain a spherical granulated body having a diameter of 2 to 5 mm.

Thereafter, the obtained granulated body was placed in air and fired under a condition of 1100°C for one hour to obtain a catalyst precursor A.

As a result of performing an X-ray diffraction measurement on the obtained catalyst precursor A, the obtained diffraction lines were only the diffraction line of the Sr₂TiO₄ structure. Therefore, it was confirmed that the obtained catalyst precursor

A is a NiO-Sr₂TiO₄ solid solution in which an Ni component is dissolved in the crystal structure of Sr₂TiO₄, and that the amount of the dissolved Ni component is 8.9 parts by mol relative to 100 parts by mol of Sr₂TiO₄.

As will be shown later, this NiO-Sr₂TiO₄ solid solution will be a mixture of SrTiO₃,SrCO₃, and Ni and/or NiO after a reforming test. This mixture can be used as a catalyst as well.

### (2) Manufacture of a reforming catalyst precursor B according to an example of the present invention

Strontium carbonate (SrCO₃) and titanium oxide (TiO₂) were weighed so as to attain a molar ratio of 2.0 : 1.0, and further, nickel oxide (NiO) was added and mixed so as to attain a ratio of 13.5 parts by mol relative to 100 parts by mol of the Sr₂TiO₄ to be produced. Subsequently, a binder was added to this mixture for granulation, so as to obtain a spherical granulated body having a diameter of 2 to 5 mm.

Thereafter, the obtained granulated body was placed in air and fired under a condition of 1100°C for one hour to obtain a catalyst precursor B.

As a result of performing an X-ray diffraction measurement on the obtained catalyst precursor

B, the obtained diffraction lines were only the diffraction line of the Sr₂TiO₄ structure. Therefore, it was confirmed that the obtained catalyst precursor

B is a NiO-Sr₂TiO₄ solid solution in which an Ni component is dissolved in the crystal structure of Sr₂TiO₄, and that the amount of the dissolved Ni component is 13.5 parts by mol relative to Sr₂TiO₄.

Carbon dioxide is allowed to act on this NiO-Sr₂TiO₄ solid solution to produce SrTiO₃,SrCO₃, and Ni and/or NiO. This mixture can be used as a catalyst as well.

### (3) Manufacture of a reforming catalyst precursor C according tc an example of the present invention

Strontium carbonate (SrCO₃) and titanium oxide (TiO₂) were weighed so as to attain a molar ratio of 2.0 : 1.0, and further, nickel oxide (NiO) was added and mixed so as to attain a ratio of 2.2 parts by mol relative to 100 parts by mol of the Sr₂TiO₄ to be produced. Subsequently, a binder was added to this mixture for granulation, so as to obtain a spherical granulated body having a diameter of 2 to 5 mm.

Thereafter, the obtained granulated body was placed in air and fired under a condition of 1100°C for one hour to obtain a catalyst precursor C.

As a result of performing an X-ray diffraction measurement on the obtained catalyst precursor C, the obtained diffraction lines were only the diffraction line of the Sr₂TiO₄ structure. Therefore, it was confirmed that the obtained catalyst precursor

C is a NiO-Sr₂TiO₄ solid solution in which an Ni component is dissolved in the crystal structure of Sr₂TiO₄, and that the amount of the dissolved Ni component is 2.2 parts by mol relative to 100 parts by mol of Sr₂TiO₄.

A mixture of SrTiO₃, SrCO₃, and Ni and/or NiO obtained by allowing carbon dioxide to act on the NiO-Sr₂TiO₄ solid solution can be used as a catalyst as well.

### (4) Manufacture of a reforming catalyst precursor D for comparison

Strontium carbonate (SrCO₃) and titanium oxide (TiO₂) were weighed so as to attain a molar ratio of 2.0 : 1.0, and further, nickel oxide (NiO) was added and mixed so as to attain a ratio of 22.2 parts by mol relative to 100 parts by mol of the Sr₂TiO₄ to be produced. Subsequently, a binder was added to this mixture for granulation, so as to obtain a spherical granulated body having a diameter of 2 to 5 mm.

Thereafter, the obtained granulated body was placed in air and fired under a condition of 1100°C for one hour to obtain a reforming catalyst precursor D for comparison.

As a result of performing an X-ray diffraction measurement on the obtained catalyst precursor D, a diffraction line of NiO phase was confirmed in addition to the diffraction line of the Sr₂TiO₄ structure. From this result, it was found out that, in the case of the manufactured catalyst precursor D for comparison, the NiO phase exceeding the solid solution limit remains in addition to the NiO-Sr₂TiO₄ solid solution.

### (5) Manufacture of a reforming catalyst precursor E for comparison

Strontium carbonate (SrCO₃) and titanium oxide (TiO₂) were weighed so as to attain a molar ratio of 2.0 : 1.0, and further, nickel oxide (NiO) was added and mixed in the same amount as in the case of the catalyst precursor A. Subsequently, a binder was added to this mixture for granulation, so as to obtain a spherical granulated body having a diameter of 2 to 5 mm.

Thereafter, the obtained granulated body was placed in air and fired under a condition of 800°C for one hour to obtain a reforming catalyst precursor E for comparison.

An X-ray diffraction measurement was carried out on the obtained catalyst precursor E. As a result, the diffraction line of the Sr₂TiO₄ structure was not confirmed, and it was confirmed that the obtained fired body is a mixed body of NiO phase, SrCO₃ phase, and SrTiO₃ phase. This is due to the fact that the firing temperature was low, and Sr₂TiO₄ phase was not produced.

### (6) Manufacture of a reforming catalyst F for comparison

Barium carbonate (BaCO₃) and titanium oxide (TiO₂)were weighed so as to attain a molar ratio of 2.0 : 1.0, and further, nickel oxide (NiO) was added and mixed so as to attain a ratio of 8.4 parts by mol relative to 100 parts by mol of the Ba₂TiO₄ to be produced. Subsequently, a binder was added to this mixture for granulation, so as to obtain a spherical granulated body having a diameter of 2 to 5 mm.

Thereafter, the obtained granulated body was placed in air and fired under a condition of 1100°C for one hour to obtain a reforming catalyst F for comparison.

An X-ray diffraction measurement was carried out on the obtained catalyst F. As a result, it was confirmed that the obtained fired body is a mixed body of NiO phase and Ba₂TiO₄ phase, namely, that a solid solution of NiO phase and Ba₂TiO₄ phase is not formed.

### (7) Manufacture of a reforming catalyst G for comparison

Strontium carbonate (SrCO₃) and zirconium oxide (ZrO₂) were weighed so as to attain a molar ratio of 2.0 : 1.0, and further, nickel oxide (NiO) was added and mixed so as to attain a ratio of 8.9 parts by mol relative to 100 parts by mol of the Sr₂ZrO₄ to be produced. Subsequently, a binder was added to this mixture for granulation, so as to obtain a spherical granulated body having a diameter of 2 to 5 mm.

Thereafter, the obtained granulated body was placed in air and fired under a condition of 1100°C for one hour to obtain a reforming catalyst G for comparison.

An X-ray diffraction measurement was carried out on the obtained catalyst G. As a result, it was confirmed that the obtained fired body is a mixed body of NiO phase and Sr₂ZrO₄ phase, namely, that a solid solution of NiO phase and Sr₂ZrO₄ phase is not formed.

Thereafter, with respect to the reforming catalysts A to C provided with the requirements of the present invention and the reforming catalysts D to G for comparison that were fabricated as described above, properties as a reforming catalyst were examined and evaluated by the methods described below.

### [2] Reforming test using carbon dioxide and evaluation of properties

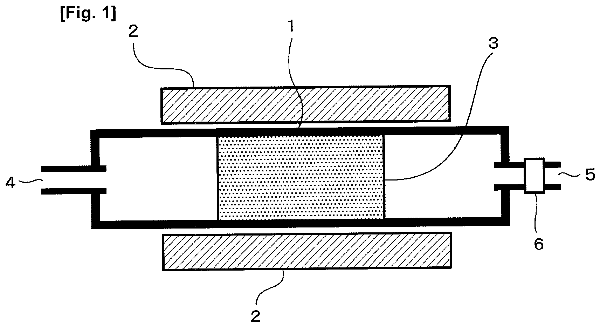

As shown in FIG. 1, a reaction tube 1 made of metal and equipped with a heater 2 in the outside was loaded with 5cc of a reforming catalyst 3 manufactured in the above-described manner, and a mixed gas of nitrogen and carbon dioxide (ratio of carbon dioxide: 20 vol%) was allowed to flow at a predetermined rate through an inlet 4 of the reaction tube 1. The mixed gas inlet temperature was controlled to be 800°C by the heater 2. After the temperature of the mixed gas to be flowed was stabilized, a mixed gas of methane and carbon dioxide (CH₄ : CO₂ = 1 : 1 (volume ratio)) was allowed to flow as a source material gas at a flow rate of 10 NL/h instead of the above mixed gas, so as to perform a reforming test for 8 hours.

Here, during the reforming test, the pressure within the reaction tube 1 was adjusted to 9 atm in terms of absolute pressure by adjusting a back-pressure valve 6 disposed on an outlet 5 side of the reaction tube 1.

Also, during the test, the gas obtained through the outlet 5 was introduced into an analyzing apparatus to measure a gas concentration.

Further, after the test was finished, the gas flow was stopped to perform cooling, and the reforming catalyst 3 was taken out from the reaction tube 1 to perform thermal weight measurement under CO₂ flow. Here, in the thermal weight measurement, the carbon deposited on the sample and CO₂ were allowed to react as in the following formula (2):

C + CO₂ => 2CO (2)

so as to estimate a decrease in the sample weight as a carbon deposition amount.

Further, with respect to the reforming catalyst 3 after the test was finished, an X-ray diffraction measurement was carried out to identify the crystal phase.

Table 1 shows a methane conversion ratio by the following formula (3):

CH₄ + CO₂ => 2H₂ + 2CO (3)

through the reforming reaction. The methane conversion ratio is a value showing how much part of the introduced methane was converted into other substances (mainly carbon monoxide and hydrogen) by the reforming reaction, and the methane conversion ratio of Table 1 is a value showing a ratio of methane converted into other substances in percentage relative to the introduced methane.

Further, Table 1 shows a carbon deposition amount and a crystal phase identified by the X-ray diffraction measurement with respect to the catalysts after the test.

**[TABLE 1]**

| Catalyst | Methane conversion ratio [%] | Deposited carbon [wt%] | Crystal phase after test |
|---|---|---|---|
| A | 58 | 0 | SrCO₃ SrTiO₃ Ni and/or NiO |
| B | 58 | 0 | SrCO₃ SrTiO₃ Ni and/or NiO |
| C | 42 | 0 | SrCO₃ SrTiO₃ Ni and/or NiO |
| D | 58 | 0.5 | SrCO₃ SrTiO₃ Ni and/or NiO |
| E | 57 | 2.8 | SrCO₃ SrTiO₃ Ni and/or NiO |
| F | 55 | > 10 | BaCO₃ BaTiO₃ Ni and/or NiO |
| G | 57 | 0.6 | SrCO₃ SrZrO₃ Ni and/or NiO |

As shown in Table 1, the reforming catalysts A, B, and D to G showed a methane conversion ratio close to the equilibrium gas composition under a condition of 800°C and 9 atm; however, the catalysts D to G generated carbon deposition. Here, the catalyst C did not generate carbon deposition though the catalyst C did not reach the equilibrium gas composition.

Also, from the crystal phase after the test, it was understood that all of the catalysts A to E having passed the test are constituted with SrCO₃, SrTiO₃, and Ni and/or NiO. However, the catalysts D and E in which the source material NiO remained in the manufacturing process generated carbon deposition while the catalysts A to C in which the total amount of the source material NiO was converted into a solid solution of NiO-Sr₂TiO₄ in the manufacturing process did not generate carbon deposition.

Similarly, in the cases of the catalyst F in which Sr in the catalyst A was replaced with Ba and the catalyst G in which Ti in the catalyst A was replaced with Zr, the source material NiO remained in the manufacturing process, so that, when these catalysts F and G were used, carbon deposition was generated.

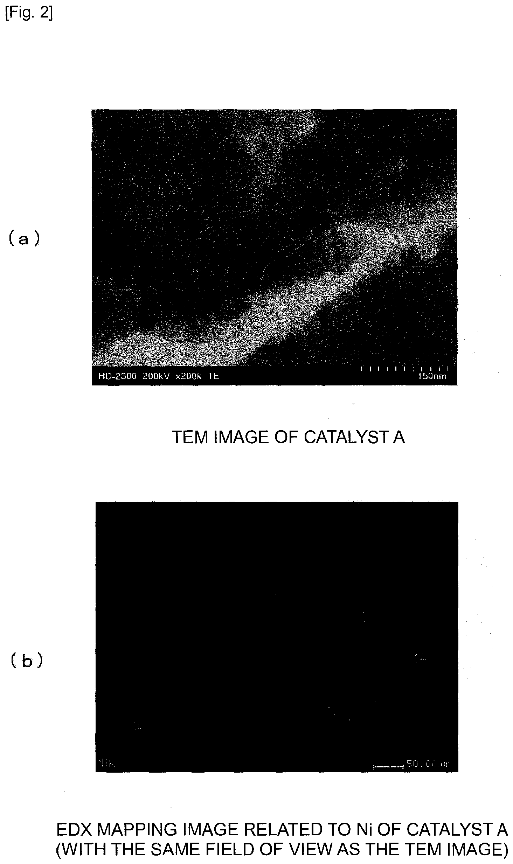

Here, the TEM images of the reforming catalysts A, D, and F after the test are shown in FIG. 2(a), FIG. 3(a), and FIG. 4(a), respectively, and the mapping images of Ni by the energy dispersion type X-ray spectroscopy (EDX) of the reforming catalysts A, D, and F are shown in FIG. 2(b), FIG. 3(b), and FIG. 4(b), respectively.

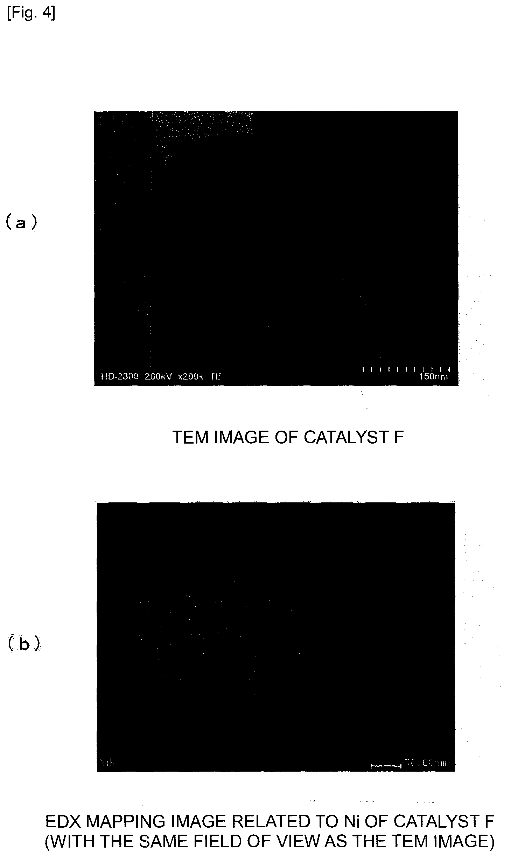

In the reforming catalyst A, Ni grains having a grain size of 50 nm or less can be confirmed as shown in FIGS. 2(a) and 2(b). In contrast, the reforming catalyst F in which the source material NiO did not form a NiO-Ba₂TiO₄ solid solution in the manufacturing process is constituted with Ni grains having a grain size of 100 nm or more as shown in FIGS. 4(a) and 4(b), and is found to keep the grain size equivalent to that of the grains of the source material NiO.

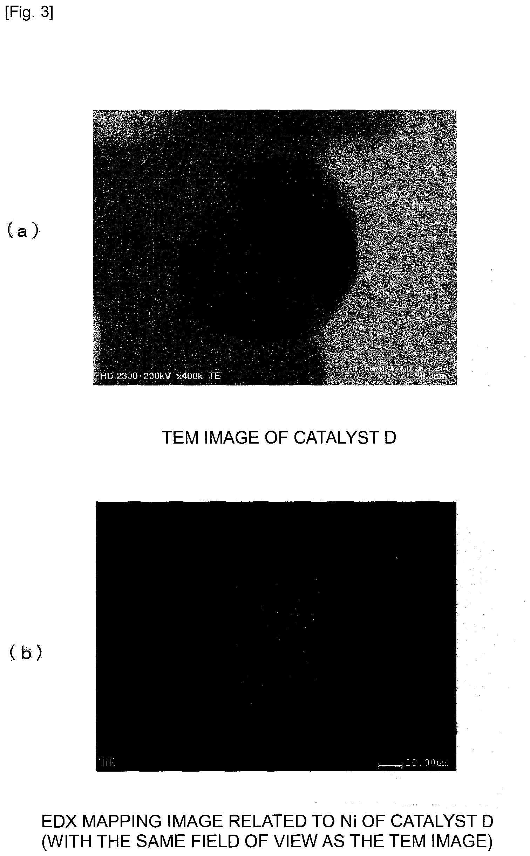

Also, it is understood that, in the reforming catalyst D in which NiO exceeding the solid solution limit is added, large Ni grains having a grain size exceeding 100 nm remain as shown in FIGS. 3(a) and 3(b) because a part of NiO remains without being dissolved.

In the reforming catalysts A to C according to the examples of the present invention that have been produced via the process in which a NiO-Sr₂TiO₄ solid solution is formed, the Ni component is brought into a state of being fully dissolved and dispersed in the whole of the solid solution when the solid solution is formed. Therefore, it is possible to obtain metal Ni and/or NiO grains having a small grain size of 50 nm or less when the Ni phase and/or the NiO phase is deposited. It is supposed that, by the effect of this miniaturization of Ni and/or NiO, the function of restraining carbon deposition is enhanced.

On the other hand, in the reforming catalyst D of the comparative example, an excessive amount of NiO exceeding the solid solution limit is added, so that Ni and/or NiO grains having a large grain size equivalent to that of the source material NiO remain in the manufactured catalyst D. As a result, it is supposed that carbon deposition is liable to be generated under a high-pressure condition.

Here, from the result of the reforming catalysts A, B, C, and D, the amount of the dissolved Ni component is preferably within a range of 2.2 parts by mol to 13.5 parts by mol relative to 100 parts by mol of Sr₂TiO₄.

Also, though the reforming catalyst E has the same composition as the reforming catalyst A in terms of the preparation composition of the source materials, the reforming catalyst E has a low firing temperature of 800°C in the manufacturing step, so that the NiO-Sr₂TiO₄ solid solution is not formed in the manufacturing process. For this reason, Ni and/or NiO grains having a large grain size equivalent to that of the source material NiO remains and, as a result, it is supposed that carbon deposition is liable to be generated under a high-pressure condition.

Also, in the reforming catalysts F and G, a NiO-Ba₂TiO₄ solid solution or a NiO-Sr₂ZrO₄ solid solution is not formed in the manufacturing process, so that Ni and/or NiO having a large grain size remains in the catalysts, and it is supposed that carbon deposition is liable to be generated.

In the above-described examples, a NiO-Sr₂TiO₄ solid solution was formed by thermally treating a mixture of NiO, SrCO₃, and TiO₂; however, the reforming catalyst of the present invention containing SrTiO₃, SrCO₃, and Ni and/or NiO can be manufactured by forming a NiO-Sr₂TiO₄ solid solution by thermally treating a mixture containing Ni and/or NiO, SrCO₃, and SrTiO₃ at a temperature of 900°C or higher.

### [3] Reforming test using carbon dioxide and/or water vapor and evaluation of properties

As shown in FIG. 1, a reaction tube 1 made of metal and equipped with a heater 2 in the outside was loaded with 5cc of the reforming catalyst A manufactured in the above-described manner, and a mixed gas of nitrogen and carbon dioxide (ratio of carbon dioxide: 20 vol%) was allowed to flow through an inlet 4 of the reaction tube 1. The mixed gas inlet temperature was controlled to be 900°C by the heater 2.

Thereafter, various source material mixed gases shown in Table 2 were allowed to flow at a flow rate of 10 NL/h for 8 hours, so as to start and carry out a reforming test of 8 hours.

During the reforming test, the pressure within the reaction tube 1 was adjusted to 5 atm in terms of absolute pressure by adjusting a back-pressure valve 6 disposed on an outlet 5 side of the reaction tube 1.

Also, during the test, the gas obtained through the outlet 5 was introduced into an analyzing apparatus to measure a gas concentration.

Further, after the test was finished, the gas flow was stopped to perform cooling, and the reforming catalyst 3 was taken out from the reaction tube 1 to perform thermal weight measurement under CO₂ flow. Here, in the thermal weight measurement, the carbon deposited on the sample and CO₂ were allowed to react as in the following formula (2):

C + CO₂ ⇒ 2CO (2)

so as to estimate a decrease in the sample weight as a carbon deposition amount.

Table 2 shows source material gas composition, reaction conversion ratio of methane to carbon monoxide, and carbon deposition amount.

Here, the test number 1 of Table 2 represents reforming with carbon dioxide in which methane, which is hydrocarbon, and carbon dioxide are allowed to react with each other; the test numbers 2 and 3 represent combination reforming with use of both of carbon dioxide and water vapor; and the test number 4 represents reforming with water vapor in which methane, which is hydrocarbon, and water vapor are allowed to react with each other.

**[TABLE 2]**

| Test number | Source material gas composition (CH₄ : CO₂ : H₂O) | Methane conversion ratio [%] | Deposited carbon [wt%] |
|---|---|---|---|
| 1 | 1 : 1 : 0 (reforming with carbon dioxide) | 86 | 0 |
| 2 | 1 : 0.5 : 0.5 (combination reforming) | 85 | 0 |
| 3 | 1 : 0.25 : 0.75 (combination reforming) | 85 | 0 |
| 4 | 1 : 0 : 1 (reforming with water vapor) | 85 | 0 |

As is shown in Table 2, under any of the source material gas conditions (namely, in any of the reforming reactions of reforming with carbon dioxide, combination reforming, and reforming with water vapor), the reforming reaction proceeds sufficiently when the catalyst A is used, and the catalyst A was confirmed to exhibit a methane conversion ratio close to the equilibrium gas composition at 900°C / 5 atm.

Also, it was confirmed that carbon deposition is not generated even by combination reforming in which both of carbon dioxide and water vapor are allowed to react on methane in the test numbers 2 and 3.

Further, it was confirmed that carbon deposition is not generated even by reforming reaction of methane with water vapor in the ratio of CH₄ / H₂O = 1.

### [4] Comparison of properties between the catalyst A according to the example of the present invention and a commercially available reforming catalyst.

The inside of a reaction tube 1 of an apparatus shown in FIG. 1 was loaded with 5cc of the above catalyst A, and a mixed gas of nitrogen and carbon dioxide (ratio of carbon dioxide: 20 vol%) was allowed to flow at a predetermined rate through an inlet 4 of the reaction tube 1. The mixed gas inlet temperature was controlled to be 900°C by a heater 2.

Thereafter, various source material mixed gases shown by the test number 11 or 13 of Table 3 were allowed to flow at a flow rate of 10 NL/h, so as to carry out a reforming test of 100 hours. Here, during the reforming test, a back-pressure valve was opened to attain 1 atm.

For comparison, the inside of a reaction tube 1 of an apparatus shown in FIG. 1 was loaded with 5cc of a commercially available reforming catalyst H containing NiO and alumina as major components, and a nitrogen gas was allowed to flow through an inlet 4 of the reaction tube 1. The mixed gas inlet temperature was controlled to be 900°C by a heater 2.

Thereafter, various source material mixed gases shown by the test number 12 or 14 of Table 3 were allowed to flow at a flow rate of 10 NL/h, so as to carry out a reforming test of 100 hours. Here, during the reforming test, a back-pressure valve was opened to attain 1 atm.

Table 3 shows source material gas composition, reaction conversion ratio of methane to carbon monoxide, and carbon deposition amount.

**[TABLE 3]**

| Test number | Source material gas composition (CH₄ : CO₂ : H₂O) | Catalyst | Methane conversion ratio [%] | Deposited carbon [wt%] |
|---|---|---|---|---|
| 11 | 1 : 1 : 0 (reforming with carbon dioxide) | A | 96 | 0 |
| 12 | 1 : 1 : 0 (reforming with carbon dioxide) | H | 96 | > 10 |
| 13 | 1 : 0 : 1 (reforming with water vapor) | A | 96 | 0 |
| 14 | 1 : 0 : 1 (reforming with water vapor) | H | 96 | 2.1 |

As shown in Table 3, in the reforming test of the test number 12 carried out under a condition of CH₄ : CO₂ = 1 : 1 by using the commercially available reforming catalyst H, the reaction tube was clogged and the internal pressure rose after several hours from the start of the test, so that the test was stopped. Carbon was mingled in the catalyst that had been taken out, and 10g or more of carbon was collected.

Also, in the reforming test of the test number 14 carried out under a condition of CH₄ : H₂O = 1 : 1 by using the commercially available reforming catalyst H, there was no rise in the internal pressure of the reaction tube, and a reforming test of 100 hours could be carried out. The catalyst taken out was fired in an oxygen atmosphere, and the burnt carbon amount was estimated by measuring the concentration of CO₂ contained in the outlet gas. Though the carbon deposition amount in the reforming test with water vapor was a smaller amount as compared with the time of reforming with carbon dioxide; however, a carbon deposition of 2.1 wt% was generated, so that it was confirmed that the accumulation of carbon raises a problem under a practical operation condition exceeding several thousand hours.

In contrast, with respect to the catalyst A, there was no rise in the internal pressure of the reaction tube in any of the condition of CH₄ : CO₂ = 1 : 1 of the test number 11 and the condition of CH₄ : H₂O = 1 : 1 of the test number 13, so that a reforming test of 100 hours could be carried out. Also, carbon deposition was not confirmed from the thermal weight measurement under CO₂ flow.

From the above results, it was confirmed that the catalyst A is excellent in the capability of restraining and preventing carbon deposition as compared with the commercially available reforming catalyst H. Also, it was confirmed that the effect thereof is not limited to the reforming reaction of methane with carbon dioxide but has a conspicuous effect even in the reforming reaction of methane with water vapor.

The present invention is not limited to the above-described examples further in other respects, so that various applications and modifications can be added within the range of the invention with respect to the condition in the step of producing a NiO-Sr₂TiO₄ solid solution, the condition in the step of producing SrTiO₃, SrCO₃, and Ni and/or NiO by allowing carbon dioxide to act on the NiO-Sr₂TiO₄ solid solution, the specific conditions of the reforming reaction, and the like.

### INDUSTRIAL APPLICABILITY

As described above, the present invention makes it possible to manufacture efficiently a reforming catalyst capable of efficiently manufacturing a synthesized gas containing hydrogen and carbon monoxide from a hydrocarbon source material gas while restraining carbon deposition when the catalyst is used in any of the reforming reactions of reforming with carbon dioxide in which reforming is carried out by allowing hydrocarbon and carbon dioxide to react with each other, reforming with water vapor in which reforming is carried out by allowing hydrocarbon and water vapor to react with each other, and combination reforming with use of both of carbon dioxide and water vapor.

Therefore, the present invention can be widely applied to the field of reforming catalysts and the field of art related to the manufacture of a synthesized gas containing hydrogen and carbon monoxide.

### DESCRIPTION OF REFERENCE SYMBOLS

- 1: reaction tube
- 2: heater
- 3: reforming catalyst
- 4: inlet of reaction tube
- 5: outlet of reaction tube
- 6: back-pressure valve

## Claims

1. A method of manufacturing a hydrocarbon gas reforming catalyst precursor comprising a NiO-Sr₂TiO₄ solid solution in which NiO is dissolved in Sr₂TiO₄, the method comprising the steps of:
providing SrCO₃ and TiO₂ in a molar ratio of 2:1,
adding NiO and mixing so as to attain a ratio of 2.2 to 13.5 parts by mol relative to 100 parts by mol of the Sr₂TiO₄, to be produced,
adding a binder to the mixture for granulation so as to obtain a spherical granulated body having a diameter of 2 to 5 mm, and
producing the NiO-Sr₂TiO₄ solid solution in which NiO is dissolved in Sr₂TiO₄ by placing said granulated body in air and firing said granulated body at a temperature of 1100°C for one hour.

2. A method of manufacturing a hydrocarbon gas reforming catalyst comprising SrTiO₃, SrCO₃ and Ni and/or NiO, the method comprising the steps of:
manufacturing a hydrocarbon gas reforming catalyst precursor by a method as defined in claim 1, and
allowing carbon dioxide to act on the NiO-Sr₂TiO₄ solid solution.

3. The method according to claim 2, further comprising a step of:
producing a synthesized gas containing carbon monoxide and hydrogen by allowing a gas containing a hydrocarbon source material gas and carbon dioxide and/or water vapor to flow through a reformer filled with the hydrocarbon gas reforming catalyst so as to bring the gas into contact with this catalyst.

4. A hydrocarbon gas reforming catalyst precursor for producing a synthesized gas containing carbon monoxide and hydrogen by reforming a hydrocarbon source material gas with use of carbon dioxide and/or water vapor, comprising a NiO-Sr₂TiO₄ solid solution in which NiO is dissolved in Sr₂TiO₄, wherein the hydrocarbon gas reforming catalyst precursor is produced by the method of claim 1, and wherein the ratio of NiO in the NiO-Sr₂TiO₄ solid solution is a ratio of 2.2 to 13.5 parts by mol relative to 100 parts by mol of Sr₂TiO₄, as determined by x-ray diffraction measurement.

5. A hydrocarbon gas reforming catalyst for producing a synthesized gas containing carbon monoxide and hydrogen by reforming a hydrocarbon source material gas with use of carbon dioxide and/or water vapor, comprising SrTiO₃, SrCO₃ and Ni and/or NiO, wherein the hydrocarbon gas reforming catalyst precursor is produced by the method of claim 2, and wherein the deposited Ni and/or NiO is in the form of fine grains with a size of 50 nm or less, as determined by TEM measurement.

## Patentansprüche

1. Verfahren zur Herstellung eines Katalysatorvorläufers zur Kohlenwasserstoffgasreformierung, der einen NiO-Sr₂TiO₄-Mischkristall umfasst, in dem NiO in Sr₂TiO₄ aufgelöst ist, wobei das Verfahren die folgenden Schritte umfasst:
Bereitstellen von SrCO₃ und TiO₂ in einem Molverhältnis von 2 : 1,
Hinzufügen von NiO und Mischen, um ein Verhältnis von 2,2 bis 13,5 Molteilen bezogen auf 100 Molteile des herzustellenden Sr₂TiO₄ zu erreichen,
Hinzufügen eines Bindemittels zu der zu granulierenden Mischung, um einen kugelförmigen Granulatkörper mit einem Durchmesser von 2 bis 5 mm zu erhalten, und
Herstellen des NiO-Sr₂TiO₄-Mischkristalls, in dem NiO in Sr₂TiO₄ gelöst ist, indem der Granulatkörper an die Luft gebracht und eine Stunde lang bei einer Temperatur von 1100 °C gebrannt wird.

2. Verfahren zur Herstellung eines Katalysators zur Kohlenwasserstoffgasreformierung, der SrTiO₃, SrCO₃ und Ni und/oder NiO umfasst, wobei das Verfahren die folgenden Schritte umfasst:
Herstellen eines Katalysatorvorläufers zur Kohlenwasserstoffgasreformierung nach einem Verfahren gemäß Anspruch 1 und
Ermöglichen, dass Kohlendioxid auf den NiO-Sr₂TiO₄-Mischkristaii einwirken kann.

3. Verfahren nach Anspruch 2, das ferner folgenden Schritt umfasst:
Herstellen eines Synthesegases, das Kohlenmonoxid und Wasserstoff enthält, indem man ein Gas, das ein Kohlenwasserstoff-Quellmaterialgas und Kohlendioxid und/oder Wasserdampf enthält, durch einen mit dem Katalysator zur Kohlenwasserstoffgasreformierung gefüllten Reformer strömen lässt, um das Gas mit diesem Katalysator in Kontakt zu bringen.

4. Katalysatorvorläufer zur Kohlenwasserstoffgasreformierung zur Herstellung eines Synthesegases, das Kohlenmonoxid und Wasserstoff enthält, durch Reformieren eines Kohlenwasserstoff-Quellmaterialgases unter Verwendung von Kohlendioxid und/oder Wasserdampf, umfassend einen NiO-Sr₂TiO₄-Mischkristall, in dem NiO in Sr₂TiO₄ gelöst ist, wobei der Katalysatorvorläufer zur Kohlenwasserstoffgasreformierung durch das Verfahren nach Anspruch 1 hergestellt wird und wobei das Verhältnis von NiO in dem NiO-Sr₂TiO₄-Mischkristall ein Verhältnis von 2,2 bis 13,5 Molteilen bezogen auf 100 Molteile Sr₂TiO₄ ist, wie durch Röntgenbeugungsmessung bestimmt.

5. Katalysator zur Kohlenwasserstoffgasreformierung zur Herstellung eines Synthesegases, das Kohlenmonoxid und Wasserstoff enthält, durch Reformieren eines Kohlenwasserstoff-Quellmaterialgases unter Verwendung von Kohlendioxid und/oder Wasserdampf, umfassend SrTiO₃, SrCO₃ und Ni und/oder NiO, wobei der Katalysatorvorläufer zur Kohlenwasserstoffgasreformierung durch das Verfahren nach Anspruch 2 hergestellt wird und wobei das abgeschiedene Ni und/oder NiO in Form von feinen Körnern mit einer Größe von 50 nm oder weniger vorliegt, wie durch TEM-Messung bestimmt.

## Revendications

1. Procédé de préparation d'un précurseur de catalyseur de reformage de gaz hydrocarbure, le précurseur comprenant une solution solide de NiO-Sr₂TiO₄ dans laquelle du NiO est dissous dans du Sr₂TiO₄, le procédé comprenant les étapes suivantes :
l'utilisation de SrCO₃ et de TiO₂ dans un rapport molaire égal à 2:1,
l'ajout de NiO et le mélange afin d'atteindre un rapport compris entre 2,2 et 13,5 parties par mol par rapport à 100 parties par mol du Sr₂TiO₄ à produire,
l'ajout d'un liant au mélange afin de permettre la granulation, de façon à obtenir un corps granulé sphérique présentant un diamètre compris entre 2 et 5 mm, et
la production de la solution solide de NiO-Sr₂TiO₄ dans laquelle du NiO est dissous dans du Sr₂TiO₄, au moyen du placement dudit corps granulé dans de l'air, et de la combustion dudit corps granulé à une température de 1100 °C pendant une heure.

2. Procédé de préparation d'un catalyseur de reformage de gaz hydrocarbure, le catalyseur comprenant du SrTiO₃, du SrCO₃ et du Ni et/ou du NiO, le procédé comprenant les étapes suivantes :
la préparation d'un précurseur de catalyseur de reformage de gaz hydrocarbure selon un procédé tel que défini dans la revendication 1, et
l'utilisation de dioxyde de carbone, en le laissant agir sur la solution solide de NiO-Sr₂TiO₄.

3. Le procédé selon la revendication 2, comprenant en outre l'étape suivante :
la production d'un gaz de synthèse contenant du monoxyde de carbone et de l'hydrogène, au moyen de l'écoulement d'un gaz contenant un matériau source hydrocarboné gazeux et du dioxyde de carbone et/ou de la vapeur d'eau à travers un reformeur rempli de catalyseur de reformage de gaz hydrocarbure, afin de mettre le gaz en contact avec ledit catalyseur.

4. Précurseur de catalyseur de reformage de gaz hydrocarbure permettant de produire un gaz de synthèse contenant du monoxyde de carbone et de l'hydrogène, au moyen du reformage d'un matériau source hydrocarboné gazeux à l'aide de dioxyde de carbone et/ou de la vapeur d'eau, le précurseur comprenant une solution solide de NiO-Sr2TiO4 dans laquelle du NiO est dissous dans du Sr₂TiO₄, le précurseur de catalyseur de reformage de gaz hydrocarbure étant produit au moyen du procédé de la revendication 1, et le rapport de NiO dans la solution solide de NiO-Sr2TiO4 étant un rapport compris entre 2,2 et 13,5 parties par mol par rapport à 100 parties par mol du Sr₂TiO₄, selon détermination à l'aide d'une mesure par diffraction des rayons X.

5. Catalyseur de reformage de gaz hydrocarbure permettant de produire un gaz de synthèse contenant du monoxyde de carbone et de l'hydrogène, au moyen du reformage d'un matériau source hydrocarboné gazeux à l'aide de dioxyde de carbone et/ou de la vapeur d'eau, le catalyseur comprenant du SrTiO₃, du SrCO₃ et du Ni et/ou du NiO, le catalyseur de reformage de gaz hydrocarbure étant produit au moyen du procédé de la revendication 2, et le Ni et/ou le NiO déposés prenant la forme de grains fins présentant une dimension égale ou inférieure à 50 nm, selon détermination à l'aide d'une mesure par TEM.
